# Europäisches Patentamt
## European Patent Office
## Office européen des brevets

(11) Veröffentlichungsnummer: **0 178 548**
**B1**

(12) **EUROPÄISCHE PATENTSCHRIFT**

(45) Veröffentlichungstag der Patentschrift:
**24.08.88**

(51) Int. Cl.⁴: **H 04 J 3/16**

(21) Anmeldenummer: **85112545.0**

(22) Anmeldetag: **03.10.85**

(54) Verfahren und Schaltungsanordnung zum Übertragen zumindest zweier binärer Datenströme über eine Multiplex-Übertragungsstrecke.

(30) Priorität: **15.10.84 DE 3437735**

(43) Veröffentlichungstag der Anmeldung:
**23.04.86 Patentblatt 86/17**

(45) Bekanntmachung des Hinweises auf die Patenterteilung:
**24.08.88 Patentblatt 88/34**

(84) Benannte Vertragsstaaten:
**AT CH DE LI NL SE**

(56) Entgegenhaltungen:
**EP - A - 0 068 595**
**EP - A - 0 112 953**
**US - A - 4 048 447**
**US - A - 4 093 823**

(73) Patentinhaber: **Siemens Aktiengesellschaft Berlin und München, Wittelsbacherplatz 2, D-8000 München 2 (DE)**

(72) Erfinder: **Finck, Herbert, Dipl.-Ing., Stobäusstrasse 18, D-8190 Wolfratshausen (DE)**

## Beschreibung

Die Erfindung bezieht sich auf ein Verfahren und eine Schaltungsanordnung zum Übertragen zumindest zweier binärer Datenströme von einem sendeseitig vorgesehenen Multiplexer zu einem empfangsseitig vorgesehenen Multiplexer in auf einer die beiden Multiplexer miteinander verbindenen Multiplex-Übertragungsstrecke massgebenden, zyklisch wiederholt auftretenden Multiplexrahmen, in denen jeweils eine Synchronisierungsinformation, eine Signalisierungsinformation und in Zeitschlitzen die Bits der zumindest beiden Datenströme übertragen werden.

Ein Verfahren und eine Schaltungsanordnung der vorstehend bezeichneten Art sind bereits bekannt (DE-A-19 49 155). Bei dem betreffenden bekannten Verfahren und der zu dessen Durchführung dienenden Schaltungsanordnung werden in den zyklisch wiederholt auftretenden Multiplexrahmen als Signalisierungsinformationen jeweils sämtliche die in dem jeweiligen Multiplexrahmen übertragenen Datenströme bezeichnenden Adressen übertragen. Ausserdem werden zu den betreffenden Datenströmen gehörende PCM-Signale in den zyklisch wiederholt auftretenden Multiplexrahmen übertragen. Diese Massnahmen bedingen jedoch einen zuweilen unerwünschten Zeit- und Schaltungsaufwand, und zwar insbesondere dann, wenn es darum geht, mit relativ niedriger Wiederholungsrate auftretende Bits von Datenströmen zu übertragen.

Es ist ferner ein Verfahren zur Belegung von Zeitschlitzen eines Zeitmultiplexsystems mit dynamischen Multiplexern bekannt (DE-B-30 01 417), bei dem vor Belegung von Zeitschlitzen in Abhängigkeit von der gerade vorliegenden Bitrate der zu übertragenden Daten die Ordnung i der benötigten Gruppe von Zeitschlitzen in einem Zeitmultiplexrahmen ermittelt wird. Zur Ermittlung freier Zeitschlitze werden dabei in festgelegter Reihenfolge die Zeitschlitzgruppen der Ordnung i innerhalb einer Zeitschlitzgruppe der Ordnung m überprüft, bis eine freie Zeitschlitzgruppe der Ordnung i gefunden ist. Falls bei der Suche nach freien Zeitschlitzgruppen innerhalb der Ordnung m keine freie Zeitschlitzgruppe der Ordnung i gefunden wurde, wird jeweils innerhalb weiterer Zeitschlitzgruppen der Ordnung m gesucht. Jedem Zeitschlitz einer gefundenen freien Gruppe von Zeitschlitzen wird eine Adresse zugeordnet, und diese Zuordnung wird dem Multiplexer der Gegenseite signalisiert, der seinerseits die entsprechende Zuordnung veranlasst. Unabhängig von der Ermittlung einer Gruppe von freien Zeitschlitzen werden entgegengesetzt der festgelegten Reihenfolge belegte Gruppen von Zeitschlitzen gesucht. Sobald eine belegte Gruppe von Zeitschlitzen gefunden ist, wird in der festgesetzten Reihenfolge eine neue Gruppe gleicher Ordnung wie die der belegten – von freien Zeitschlitzen – gesucht, die in der festgelegten Reihenfolge vor der gefundenen belegten Gruppe liegen muss. Wenn die neue Gruppe von freien Zeitschlitzen gefunden ist, wird diesen Zeitschlitzen die der belegten Gruppe zugeordnete Adresse zugeordnet, und diese Zuordnung wird dem Multiplexer der Gegenstelle signalisiert, der seinerseits eine entsprechende Zuordnung veranlasst. Sobald die neue Gruppe von Zeitschlitzen belegt ist, wird die bisher belegte Gruppe von Zeitschlitzen freigegeben. Durch diese Massnahmen steht zwar ein Multiplexersystem zur Verfügung, dessen Multiplexer bei hoher Flexibilität hinsichtlich unterschiedlicher Bitraten und ohne erhebliche Verzögerungszeiten belegt werden können. Die mit dem Belegen und Umrangieren der jeweils zu benutzenden Zeitschlitze verbundenen Massnahmen bedingen jedoch einen Steuerungsaufwand, der zuweilen als unerwünscht angesehen wird.

Der Erfindung liegt demgemäss die Aufgabe zugrunde, einen Weg zu zeigen, wie bei einem Verfahren der eingangs genannten Art die Übertragung zumindest zweier binärer Datenströme über eine Multiplex-Übertragungsstrecke einfacher vorgenommen werden kann als bei den zuvor betrachteten bekannten Verfahren.

Gelöst wird die vorstehend aufgezeigte Aufgabe bei einem Verfahren der eingangs genannten Art erfindungsgemäss dadurch, dass die Datenströme bitverschachtelt über die Multiplex-Übertragungsstrecke übertragen werden, dass als Signalisierungsinformation eine jeweils einen Datenstrom bezeichnende Adresse und eine bzw. mehrere die für die Übertragung eines oder mehrerer Bits dieses Datenstroms in wenigstens einem Multiplexrahmen zu benutzenden Zeitschlitz/Zeitschlitze bezeichnende Zeitschlitzadresse/Zeitschlitzadressen übertragen werden und dass eine Signalisierungsinformation lediglich zu Beginn und am Ende der Übertragung von Bits ihres zugehörigen Datenstroms übertragen wird.

Die Erfindung bringt den Vorteil mit sich, dass auf relativ einfache Weise zumindest zwei binäre Datenströme über eine Multiplex-Übertragungsstrecke übertragen werden können, ohne dass die betreffende Übertragung durch nennenswerte Signalisierungsinformationen bzw. Datenstrominformationen belastet ist. Durch die Bitverschachtelung der Datenströme wird überdies der Vorteil erzielt, dass ohne ein Umrangieren der den einzelnen Datenströmen zugeteilten Zeitschlitze in aufeinanderfolgenden Multiplexrahmen ausgekommen werden kann, ohne dass damit die sendeseitig gegebenenfalls vorhandene Äquidistanz der Bits der zu übertragenden Datenströme auf der Empfangsseite verloren ist.

Vorzugsweise wird der einwandfreie oder fehlerhafte Empfang der Signalisierungsinformationen in dem empfangsseitig vorgesehenen Multiplexer quittiert, indem von diesem Multiplexer zu dem sendeseitig vorgesehenen Multiplexer mindestens ein Quittungssignal übertragen wird. Hierdurch ergibt sich der Vorteil, dass der sendeseitig vorgesehene Multiplexer über den Empfang der von ihm ausgesendeten Signalisierungsinformationen informiert ist und damit entsprechende Steuerungsvorgänge auszulösen gestattet.

Zweckmässigerweise erfolgt die Übertragung Bits eines Datenstroms von dem sendeseitig vorgesehenen Multiplexer erst dann, wenn in diesem Multiplexer ein den einwandfreien Empfang der dem betreffenden Datenstrom zugehörigen Signalisierungsinformation angebendes Quittungssignal empfangen worden ist. Dadurch erfolgt in vorteilhafter Weise keine unnötige Übertragung von Datenstrombits.

Von Vorteil ist es ferner, wenn die Übertragung von Bits des jeweiligen Datenstroms in demjenigen Multiplexrahmen begonnen wird bzw. erfolgt, in welchem die Übertragung der zugehörigen Signalisierungsinformation abgeschlossen ist. Hierdurch ergibt sich der Vorteil, dass ohne besondere Verzögerungszeiten mit der Übertragung der Datenstrombits begonnen werden kann.

Es ist andererseits aber auch von Vorteil, wenn die Übertragung von Bits des jeweiligen Datenstroms unmittelbar nach dem Multiplexrahmen begonnen wird bzw. erfolgt, in welchem die Übertragung der zugehörigen Signalisierungsinformation abgeschlossen ist. In diesem Fall beginnt die Übertragung von Datenstrombits besonders schnell nach der Übertragung der zugehörigen Signalisierungsinformation.

Zweckmässigerweise werden in dem Fall, dass eine Signalisierungsinformation in dem empfangsseitig vorgesehenen Multiplexer nicht richtig erkannt worden ist, die dieser Signalisierungsinformation zugehörigen Datenstrombits hinsichtlich ihrer Verarbeitung und Weiterleitung unberücksichtigt gelassen. Dadurch ist in vorteilhafter Weise sichergestellt, dass keine fehlerhafte Datenübertragung erfolgt.

Vorzugsweise werden die Datenstrombits in dem sendeseitig vorgesehenen Multiplexer zwischengespeichert. Diese Massnahme bringt den Vorteil mit sich, dass auf relativ einfache Weise Verzögerungszeiten im Zuge der Weiterleitung und Verarbeitung der einzelnen Datenstrombits berücksichtigt bzw. ausgeglichen werden können.

Zur Durchführung des Verfahrens gemäss der Erfindung ist es zweckmässig, eine Schaltungsanordnung mit einem sendeseitig vorgesehenen Multiplexer und mit einem empfangsseitig vorgesehenen Multiplexer zu verwenden, der mit dem sendeseitig vorgesehenen Multiplexer über eine Multiplexstrecke verbunden ist, wobei in jedem der beiden Multiplexer Kanal- und Steierschaltungen enthalten sind. Diese Schaltungsanordnung ist erfindungsgemäss dadurch gekennzeichnet, dass jeder Multiplexer einen Belegungsspeicher umfasst, in welchem die Zeitschlitzadressen derjenigen Zeitschlitze gespeichert sind, in denen in auf der Multiplexstrecke massgebenden Multiplexrahmen Bits von Datenströmen übertragen werden, dass jeder Multiplexer eine Signalisierungssteuereinrichtung umfasst, welche die in dem jeweiligen Multiplexrahmen zu übertragende bzw. übertragene Signalisierungsinformation bereitstellt bzw. aufnimmt und auswertet, dass der sendeseitig vorgesehene Multiplexer eine Multiplexrahmen- Erzeugungseinrichtung umfasst, welche die auf der Multiplexstrecke massgebenden Multiplexrahmen und innerhalb dieser die Synchronisierungsinformation, die Signalisierungsinformation und die für die Übertragung der Bits der Datenströme massgebenden Zeitschlitze festlegt, und dass der empfangsseitig vorgesehene Multiplexer eine Multiplexrahmen-Erkennungseinrichtung umfasst, welche die auf der Multiplexstrecke massgebenden Multiplexrahmen und innerhalb dieser die Synchronisierungsinformation, die Signalisierungsinformation und die gegebenenfalls Bits von Datenströmen führenden Zeitschlitze ermittelt und die Auswertung der jeweils übertragenen Signale bzw. Bits ermöglicht. Hierdurch ergibt sich der Vorteil eines insgesamt relativ geringen schaltungstechnischen Aufwands.

Vorzugsweise enthält jeder Multiplexer einen Pufferspeicher, in dem die Bits der Datenströme zwischenspeicherbar sind. Dadurch gelingt es in vorteilhafter Weise, sämtliche Datenstrombits für die Übertragung unabhängig von den vorhandenen Verarbeitungs- bzw. Übertragungszeiten zu berücksichtigen.

Anhand von Zeichnungen wird die Erfindung nachstehend beispielsweise näher erläutert.

Fig. 1 zeigt in einem Blockschaltbild eine Schaltungsanordnung gemäss der Erfindung.

Fig. 2 zeigt in einem Diagramm den Aufbau eines Multiplexrahmens, wie er auf einer in Fig. 1 angedeuteten Multiplex-Übertragungsstrecke massgebend ist.

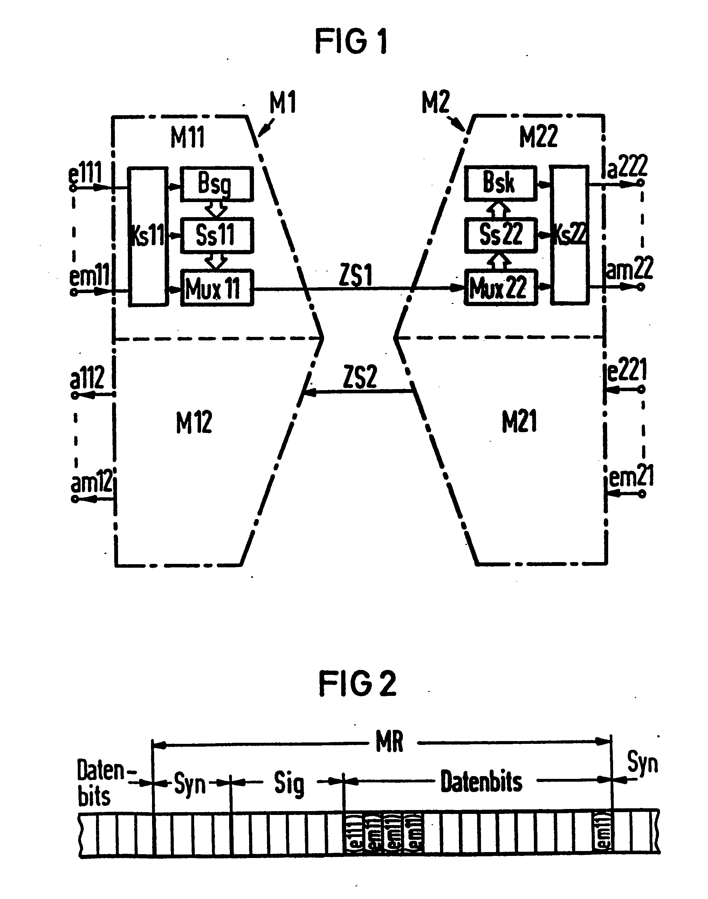

Fig. 1 zeigt in eimen Blockschaltbild ein Übertragungssystem mit zwei Multiplexern M1, M2, die über eine Multiplex-Übertragungsstrecke ZS1 und über eine Multiplex-Übertragungsstrecke ZS2 miteinander verbunden sind. Die Multiplex-Übertragungsstrecke ZS1 dient für die Übertragung von Signalen bzw. Bits vom Multiplexer M1 zum Multiplexer M2, und die Multiplex-Übertragungsstrecke ZS2 dient für die Übertragung von Signalen bzw. Bits vom Multiplexer M2 zum Multiplexer M1.

Die beiden Multiplexer M1, M2 weisen jeweils einen Datenströme aufnehmenden Multiplexteil M11 bzw. M21 und einen Datenströme abgebenden Demultiplexteil M12 bzw. M22 auf. In Fig. 1 sind lediglich der Multiplexteil M11 des Multiplexers M1 und der Demultiplexteil M22 des Multiplexers M2 näher veranschaulicht.

Zu dem Multiplexteil M11 gehört eine Kanalschaltung Ks11, die eingangsseitig an Signalanschlüssen e111 bis em11 angeschlossen ist. Über diese Eingangsanschlüsse werden der Kanalschaltung Ks11 Datenströme zugeführt, die mit unterschiedlichen Übertragungsraten auftreten können, beispielsweise zwischen 1,2 kbit/s und 19,8 kbit/s. Die Kanalschaltung Ks11 ist ausgangsseitig mit einer Multiplex-Erzeugungseinrichtung Mux11 verbunden, welche die auf der Multiplex-Übertragungsstrecke MS1, im folgenden kurz nur Multiplexstrecke genannt, massgebenden Multiplexrahmen festlegt. Ferner ist mit der Kanalschaltung Ks11 eine Signalisierungssteuereinrichtung Ss11 verbunden, auf deren Bedeutung im Zusammenhang mit Fig. 2 noch näher eingegangen wird. Schliesslich ist mit der Kanalschaltung Ks11 ein Belegungsspeicher Bsg (für abgehenden Verkehr) verbunden, in welchem Zeitschlitzadressen von Zeitschlitzen gespeichert sind, in denen in auf der Multiplexstrecke ZS1 massgebenden Multiplexrahmen Bits von Datenströmen übertragen werden.

Der Demultiplexteil M22 weist gemäss Fig. 1 eine Kanalschaltung Ks22 auf, die eingangsseitig mit einer Multiplexrahmen-Erkennungseinrichtung Mux22 verbunden ist. Diese Multiplexrahmen-Erkennungseinrichtung Mux22 ist eingangsseitig an der Multiplexstrecke ZS1 angeschlossen, sie dient dazu, die auf dieser Multiplexstrecke massgebenden Multiplexrahmen und innerhalb dieser die für die Auswertung infrage kommenden Informationen bzw. Zeitschlitze zu ermitteln. Hierauf wird im Zusammenhang mit Fig. 2 noch näher eingegangen. Die Kanalschaltung KS22 ist eingangsseitig ferner mit einer Signalisierungssteuereinrichtung Ss22 verbunden, welche ebenfalls mit der Multiplexrahmen-Erkennungseinrichtung Mux22 verbunden ist. Schliesslich ist die Kanalschaltung Ks22 eingangsseitig mit einem Belegungsspeicher Bsk (für ankommenden Verbindungsverkehr) verbunden. In diesem mit der Signalisierungssteuereinrichtung Ss22 und der Multiplexrahmen-Erkennungseinrichtung Mux22 verbundenen Belegungsspeicher Bsk sind die Zeitschlitzadressen derjenigen Zeitschlitze gespeichert, in denen in den auf der Multiplexstrecke ZS1 massgebenden Multiplexrahmen Bits von Datenströmen übertragen werden. Bezüglich der Kanalschaltung Ks22 ist noch anzumerken, dass diese ausgangsseitig mit Anschlüssen a222 bis am22 verbunden ist; über diese Anschlüsse gibt die Kanalschaltung Ks22 die über die Multiplexstrecke ZS1 übertragenen Datenströme ab.

Der in Fig. 1 angedeutete Multiplexteil M21 und der in Fig. 1 ebenfalls angedeutete Demultiplexteil M12 sind in entsprechender Weise aufgebaut wie der zuvor erläuterte Multiplexteil M11 bzw. der zuvor erläuterte Demultiplexteil M22. Der Multiplexteil M21 ist eingangsseitig an Anschlüssen e221 bis em21 angeschlossen, und der Demultiplexteil M12 ist ausgangsseitig an Anschlüssen a112 bis am12 angeschlossen. Über diese Anschlüsse werden Datenströme aufgenommen bzw. abgegeben und über die Multiplexstrecke ZS2 übertragen.

Im Hinblick auf die in Fig. 1 dargestellten Multiplexer M1 und M2 sei noch angemerkt, dass diese in ihrem jeweiligen Multiplexerteil und in ihrem jeweiligen Demultiplexerteil einen Pufferspeicher enthalten können, der vorzugsweise in der jeweiligen Kanalschaltung untergebracht ist. Dieser Pufferspeicher dient dazu, die ihm eingangsseitig jeweils zugeführten Datenstrombits zwischenzuspeichern, bis sie übertragen werden können. Wie oben erwähnt, ist es dadurch möglich, Datenstrombits vom einen Multiplexer zum anderen Multiplexer zu übertragen, ohne dass es dabei zu einem Verlust von Datenbits kommt. Im übrigen gestattet diese Massnahme auf besonders einfache Weise, im empfangsseitig vorgesehenen Multiplexer, also in dem Demultiplexerteil M22 gemäss Fig. 1, die über die einzelnen Ausgangsanschlüsse abzugebenden Datenstrombits äquidistant abgeben zu können.

Zur Erläuterung der Arbeitsweise der in Fig. 1 dargestellten Schaltungsanordnung sei nunmehr auf das in Fig. 2 dargestellte Diagramm Bezug genommen. Dieses Diagramm zeigt den Aufbau eines Multiplexrahmens MR. Dieser Multiplexrahmen umfasst eine Synchronisierungsinformation Syn, eine Signalisierungsinformation Sig und eine Mehrzahl von Zeitschlitzen für die Aufnahme von Datenbits. In diesem zyklisch wiederholt auftretenden Multiplexrahmen MR dient die Synchronisierungsinformation Syn dazu, den Beginn des betreffenden Multiplexrahmens MR zu kennzeichnen. Die Signalisierungsinformation Sig dient zur Übertragung jeweils einer Adresse, die einen Datenstrom bezeichnet, und zur Übertragung einer oder mehrerer Zeitschlitzadressen, mit der bzw. denen der Zeitschlitz bzw. die Zeitschlitze bezeichnet sind, die für die Übertragung von zugehörigen Datenstrombits benutzt werden. So kann die betreffende Signalisierungsinformation Sig beispielsweise als eine einen Datenstrom bezeichnende Adresse eine den Anschluss e111 bezeichnende Adresse enthalten, mit dem dann der über den Anschluss e111 eintreffende und weiterzuleitende Datenstrom bezeichnet ist. Nimmt man einmal an, dass die Bits dieses Datenstroms mit einer derart niedrigen Übertragungsrate auftreten, dass pro Multiplexrahmen MR lediglich ein Datenstrombit dieses Datenstroms übertragen zu werden braucht, und geht man ferner davon aus, dass von den für die Datenstrombitübertragung vorgesehenen Zeitschlitzen der erste Zeitschlitz im Anschluss an dendie Signalisierungsinformation führenden Bereich des Multiplexrahmens MR gerade frei ist, so enthält die Signalisierungsinformation ausser der bereits erwähnten Adresse noch die Adresse dieses ersten Zeitschlitzes.

Die Übertragung der Bits des jeweiligen Datenstroms kann in demjenigen Multiplexrahmen begonnen bzw. vorgenommen werden, in welchem die Übertragung der zugehörigen Signalisierungsinformation Sig abgeschlossen ist. Es ist aber auch möglich, die Übertragung der Bits des jeweiligen datenstroms erst unmittelbar nach dem Multiplexrahmen zu beginnen bzw. vorzunehmen, in welchem die Übertragung der zugehörigen Signalisierungsinformation abgeschlossen ist. Andererseits ist es aber auch möglich, die Übertragung von Bits des jeweiligen Datenstroms erst dann vorzunehmen, wenn in dem sendeseitig vorgesehenen Multiplexer, also beispielsweise in dem Multiplexteil M11, ein den einwandfreien Empfang der dem betreffenden Datenstrom zugehörigen Signalisierungsinformation angebendes Quittungssignal empfangen worden ist. Wenn eine Signalisierungsinformation in dem empfangsseitig vorgesehenen Multiplexer nicht richtig erkannt worden ist, dann werden in diesem Fall die dieser Signalisierungsinformation zugehörigen Datenstrombits hinsichtlich ihrer Verarbeitung und Weiterleitung unberücksichtigt gelassen.

Vorstehend ist im Zusammenhang mit dem in Fig. 2 dargestellten Diagramm erläutert worden, dass in dem mit Datenbits bezeichneten Bereich des Multiplexrahmens MR ein Datenstrombit in einem Zeitschlitz (e111) übertragen wird. Neben diesem Zeitschlitz sind in dem betreffenden bereich noch vier weitere Zeitschlitze belegt, in denen jeweils die Angabe em11 enthalten ist. Damit ist zum Ausdruck gebracht, dass für die Übertragung des dem Anschluss em11 in Fig. 1 zugeführten Datenstroms in dem in Fig. 2 angedeuteten Multiplexrahmen MR vier Zeitschlitze zur Verfügung stehen. Die Datenstrombits dieses Datenstroms werden mit der vierfachen Übertragungsrate der Datenstrombits desjenigen Datenstroms übertragen, der dem Anschluss e111 gemäss Fig. 1 zugeführt ist. Die für die Übertragung der dem Anschluss em11 zugeführten Datenstrombits zur Verfügung gestellten Zeitschlitze in dem Multiplexrahmen MR treten dabei nicht äquidistant zueinander auf; die betreffenden Zeitschlitze sind vielmehr solche Zeitschlitze, die zu Beginn der Übertragung des betreffenden Datenstroms gerade verfügbar waren. Diese Zeitschlitze werden während der Dauer der Übertragung des betreffenden Datenstroms in den zyklisch aufeinanderfolgenden Multiplexrahmen beibehalten. Dies gilt im übrigen für sämtliche, der Übertragung von Datenstrombits zugestellten Zeitschlitzen.

Der Aufbau des vorstehend erläuterten Multiplexrahmens MR wird bei der in Fig. 1 dargestellten Schaltungsanordnung durch die Multiplex-Erzeugungseinrichtung Mux11 festgelegt. Diese Multiplexeinrichtung gibt zu Beginn jedes Multiplexrahmens MR die Synchronisierungsinformation Syn ab. Im Anschluss daran gibt die betreffende Multiplexeinrichtung eine Signalisierungsinformation Sig ab, welche jeweils nur eine einen Datenstrom bezeichnende Adresse und eine bzw. mehrere, die für die Übertragung eines oder mehrerer Bits dieses Datenstroms in mindestens einem Multiplexrahmen zu benutzenden Zeitschlitz/Zeitschlitze bezeichnende Zeitschlitzadresse/Zeitschlitzadressen umfasst. Diese Signalisierungsinformation wird dabei lediglich zu Beginn und am Ende der Übertragung von Bits ihres zugehörigen Datenstroms übertragen. Die in dem mit Datenbits bezeichneten Bereich des jeweiligen Multiplexrahmens MR auftretenden Datenströme werden bitverschachtelt über die Multiplex-Übertragungsstrecke übertragen. Durch in dem die betreffenden Datenstrombits bzw. Datenbits aufnehmenden empfangsseitig vorgesehenen Multiplexer werden die dem jeweiligen Datenstrom zugehörigen Bits äquidistant abgegeben. Dazu dienen in den betreffenden Multiplexern Puffer- bzw. Zwischenspeicher, deren Funktion gegebenenfalls durch in den Kanalschaltungen enthaltene Register ausgeübt werden kann.

**Patentansprüche**

1. Verfahren zum Übertragen zumindest zweier binärer Datenströme von einem sendeseitig vorgesehenen Multiplexer (M11) zu einem empfangsseitig vorgesehenen Multiplexer (M22) in auf einer die beiden Multiplexer (M11, M22) miteinander verbindenden Multiplex-Übertragungsstrecke (ZS1) massgebenden, zyklisch wiederholt auftretenden Multiplexrahmen (MR), in denen jeweils eine Synchronisierungsinformation (Syn), eine Signalisierungsinformation (Sig) und in Zeitschlitzen die Bits der zumindest beiden Datenströme übertragen werden, dadurch bekennzeichnet, dass die Datenströme bitverschachtelt über die Multiplex-Übertragungsstrecke (ZS1) übertragen werden, dass als Signalisierungsinformation (Sig) eine jeweils einen Datenstrom bezeichnende Adresse eine bzw. mehrere die für die Übertragung eines oder mehrerer Bits dieses Datenstroms in wenigstens einem Multiplexrahmen (MR) zu benutzenden Zeitschlitz/Zeitschlitze bezeichnende Zeitschlitzadresse/Zeitschlitzadressen übertragen werden und dass eine Signalisierungsinformation (Sig) lediglich zu Beginn und am Ende der Übertragung von Bits ihres zugehörigen Datenstroms übertragen wird.

2. Verfahren nach Anspruch 1, dadurch gekennzeichnet, dass der einwandfreie oder fehlerhafte Empfang der Signalisierungsinformationen (Sig) in dem empfangsseitig vorgesehenen Multiplexer (M22) quittiert wird, indem von diesem Multiplexer (M22) zu dem sendeseitig vorgesehenen Multiplexer (M11) mindestens ein Quittungssignal übertragen wird.

3. Verfahren nach Anspruch 2, dadurch gekennzeichnet, dass die Übertragung von Bits eines Datenstroms von dem sendeseitig vorgesehenen Multiplexer (M11) erst dann erfolgt, wenn in diesem Multiplexer (M11) ein den einwandfreien Empfang der dem betreffenden Datenstrom zugehörigen Signalisierungsinformation (Sig) angebendes Quittungssignal empfangen worden ist.

4. Verfahren nach einem der Ansprüche 1 bis 3, dadurch gekennzeichnet, dass die Übertragung von Bits des jeweiligen Datenstroms in demjenigen Multiplexrahmen (MR) begonnen wird bzw. erfolgt, in welchem die Übertragung der zugehörigen Signalisierungsinformation (Sig) abgeschlossen ist.

5. Verfahren nach einem der Ansprüche 1 bis 3, dadurch gekennzeichnet, dass die Übertragung von Bits des jeweiligen Datenstroms unmittelbar nach dem Multiplexrahmen (MR) begonnen wird bzw. erfolgt, in welchem die Übertragung der zugehörigen Signalisierungsinformation (Sig) abgeschlossen ist.

6. Verfahren nach einem der Ansprüche 2 bis 4, dadurch gerkennzeichnet, dass in dem empfangsseitig vorgesehenen Multiplexer (M22) in dem Fall, dass eine Signalisierungsinformation (Sig) nicht richtig erkannt worden ist, die dieser Signalisierungsinformation zugehörigen Datenstrombits hinsichtlich ihrer Verarbeitung und Weiterleitung unberücksichtigt gelassen werden.

7. Verfahren nach einem der Ansprüche 1 bis 6, dadurch gekennzeichnet, dass die Datenstrombits in dem sendeseitig vorgesehenen Multiplexer (M11) zwischengespeichert werden.

8. Schaltungsanordnung zur Durchführung des Verfahrens nach einem der Ansprüche 1 bis 7, mit einem sendeseitigen Multiplexer (M11) und einem empfangsseitigen Multiplexer (M22) der mit dem sendeseitigen Multiplexer (M11) über eine Multiplexstrecke (ZS1) verbunden ist, und mit in den beiden Multiplexern (M11, M22) enthaltenen Kanal- und Steuerschaltungen (Ks11, Ks22), dadurch gekennzeichnet, dass jeder Multiplexer einen Belegungsspeicher (Bsg, Bsk) umfasst, in welchem die Zeitschlitzadressen derjenigen Zeitschlitze gespeichert sind, in denen in auf der Multiplexstrecke (ZS1) massgebenden Multiplexrahmen (MR) Bits von Datenströmen übertragen werden, dass jeder Multiplexer (M11, M12) eine Signalisierungssteuereinrichtung (Ss11, Ss22) umfasst, welche die in dem jeweiligen Multiplexrahmen (MR) zu übertragende bzw. übertragene Signalisierungsinformation (Sig) bereitstellt bzw. aufnimmt und auswertet, dass der sendeseitig vorgesehene Multiplexer (M11) eine Multiplexrahmen-Erzeugungseinrichtung (MUX 11) umfasst, welche die auf der Multiplexstrecke (ZS1) massgebenden Multiplexrahmen (MR) und innerhalb dieser die Synchronisationsinformation (Syn), die Signalisierungsinformation (Sig) und die für die Übertragung der Bits der Datenströme massgebenden Zeitschlitze festlegt, und dass der empfangsseitig vorgesehene Multiplexer (M22) eine Multiplexrahmen-Erkennungseinrichtung (Mux22) umfasst, welche die auf der Multiplexstrecke (ZS1) massgebenden Multiplexrahmen (MR) und innerhalb dieser die Synchronisationsinformation (Syn), die Signalisierungsinformation (Sig) und die gegebenenfalls Bits von Datenströmen führenden Zeitschlitze ermittelt und die Auswertung der jeweils übertragenen Signale bzw. Bits ermöglicht.

9. Schaltungsanordnung nach Anspruch 8, dadurch gekennzeichnet, dass jeder Multiplexer (M11, M22) einen Pufferspeicher enthält, in dem die Bits der Datenströme zwischenspeicherbar sind.

**Claims**

1. A method of transmitting at least two binary data flows from a multiplexer (M11) arranged at the transmitting end to a multiplexer (M22) arranged at the receiving end in multiplex frames (MR) which occur with cyclic repetition, which govern a multiplex transmission link (ZS1) which connects the two multiplexers (M11, M22) to one another, and each of which transmits an item of synchronising information (Syn), an item of signalling information (Sig) and, in time slots, the bits of the minimum of two data flows, characterised in that the data flows are transmitted with bit interleaving via the multiplex transmission line (ZS1), that as signalling information (Sig) there is transmitted a respective address which designates a data flow and a time slot address/a plurality of time slot addresses which designate(s) the time slot/time slots to be used for the transmission of one or several bits of this data flow in at least one multiplex frame (MR), and that an item of signalling information (Sig) is transmitted only at the beginning and at the end of the transmission of bits of its associated data flow.

2. A method as claimed in claim 1, characterised in that the satisfactory or faulty reception of the items of signalling information (Sig) is acknowledged in the multiplexer (M22) arranged at the receiving end in that at least one acknowledgement signal is transmitted from this multiplexer (M22) to the multiplexer (M11) arranged at the transmitting end.

3. A method as claimed in claim 2, characterised in that the transmission of bits of a data flow by the multiplexer (M11) arranged at the transmitting end does not take place until an acknowledgement signal indicating the satisfactory reception of the signalling information (Sig) assigned to the respective data flow, has been received in this multiplexer (M11).

4. A method as claimed in one of the claims 1 to 3, characterised in that the transmission of bits of the respective data flow is commenced and takes place in that multiplex frame (MR) in which the transmission of the associated signalling information (Sig) is completed.

5. A method as claimed in one of the claims 1 to 3, characterised in that the transmission of bits of the respective data flow is commenced and takes place immediately following that multiplex frame (MR) in which the transmission of the associated signalling information (Sig) is completed.

6. A method as claimed in one of the claims 2 to 4, characterised in that in the multiplexer (M22) arranged at the receiving end, in the event that an item of signalling information (Sig) has not been correctly recognised, the data flow bits assigned to this signalling information are excluded form processing and transmission.

7. A method as claimed in one of the claims 1 to 6, characterised in that the data flow bits are intermediately stored in the multiplexer (M11) arranged at the transmitting end.

8. A circuit arrangement for implementing the method claimed in one of the claims 1 to 7, with a multiplexer (M11) arranged at the transmitting end and a multiplexer (M22) which is arranged at the receiving end and which is connected to the transmitting-end multiplexer (M11) via a multiplex link (ZS1), and with channel- and control circuits (Ks11, Ks22) which are contained in both multiplexers (M11, M22), characterised in that each multiplexer includes a seizure store (Bsg, Bsk) which stores the time slot addresses of those time slots in which bits of data flows are transmitted in multiplex frames (MR) which govern the multiplex link (ZS1), that each multiplexer (M11, M12) includes a signalling control device (Ss11, Ss22) by which the signalling information (Sig) which is to be transmetted or has been transmitted in the respective multiplex frame (MR) is made available or is received and analysed respectively, that the multiplexer (M11) arranged at the transmitting end comprises a multiplex frame generating device (MUX11) which determines the multiplex frames (MR) which govern the multiplex link (ZS1) and, within the latter, the synchronising information (Syn), the signalling information (Sig) and the time slots which govern the transmission of the bits of the data flows, and that the multiplexer (M22) arranged at the receiving end comprises a multiplex frame recognition device (Mux22) which determines the multiplex frames (MR) which govern the multiplex link (ZS1) and, within the latter, the synchronisation information (Syn), the signalling information (Sig) and the time slots which where appropriate conduct bits of data flows, and which facilitates the analysis of the respective transmitted signals and bits respectively.

9. A circuit arrangement as claimed in claim 8, characterised in that each multiplexer (M11, M22) includes a buffer store in which the bits of the data flows can be intermediately stored.

**Revendications**

1. Procédé de transmission d'au moins deux trains de données binaires, d'un multiplexeur (M11) prévu du côté émission à un multiplexeur (M22) prévu du côté réception, sur une ligne de transmission en multiplex (ZS1) reliant les deux multiplexeurs (M11, M22) ensemble, répété en trames de multiplex (MR) caractéristiques et se produisant de manière cyclique, dans lesquelles sont à chaque fois transmis une information de synchronisation (Syn), une information de signalisation (Sig) et, en créneaux temporels, les bits des au moins deux trains de données, caractérisé en ce que les trains de données sont transmis par bits entrelacés par l'intermédiaire de la ligne de transmission en multiplex (ZS1), qu'en tant qu'information de signalisation (Sig) sont transmis une adresse représentant à chaque fois un train de données et l'une des, éventuellement plusieurs, adresse de créneaux temporels/adresses de créneaux temporels représentant un créneau temporel/des créneaux temporels à utiliser pour la transmission d'un ou de plusieurs bits de ce train de données dans au moins une trame de multiplex (MR), et qu'une information de signalisation (Sig) est transmise uniquement au début et à la fin de la transmission des bits de son train de données correspondant.

2. Procédé selon la revendication 1, caractérisé en ce que la réception parfaite ou défectueuse des informations de signalisation (Sig) est confirmée dans le multiplexeur (M22), prévu du côté réception, dans lequel au moins un sigal d'accusé de réception est transmis de ce multiplexeur (M22) vers le multiplexeur (M11) prévu du côté émission.

3. Procédé selon la revendication 2, caractérisé en ce que la transmission des bits d'un train de données, à partir du multiplexeur (M11) prévu du côté émission, ne se produit qu'une fois qu'un signal d'accusé de réception, indiquent la réception parfaite de l'information de signalisation (Sig) relative au train de données correspondant, ait été réceptionné.

4. Procédé selon l'une des revendications 1 à 3, caractérisé en ce que la transmission des bits de chaque train de données débute ou s'effectue, dans la trame de multiplex (MR) dans laquelle la transmission de l'information de signalisation (Sig) correspondante est contenue.

5. Procédé selon l'une des revendications 1 à 3, caractérisé en ce que la transmission des bits de chaque train de données débute ou s'effectue, directement après la trame de multiplex (MR) dans laquelle la transmission de l'information de signalisation (Sig) correspondante est contenue.

6. Procédé selon l'une des revendications 2 à 4, caractérisé en ce que dans le multiplexeur prévu côté réception (M22), dans le cas où une information de signalisation (Sig) n'a pas été reconnue correctement, on ne tient pas compte des bits du train de données correspondants à cette information de signalisation, en ce qui concerne leur traitement et leur acheminement ultérieurs.

7. Procédé selon l'une des revendications 1 à 6, caractérisé en ce que les bits du train de données sont mémorisés temporairement dans le multiplexeur (M11) prévu côté émission.

8. Montage pour mettre en œuvre le procédé selon l'une des revendications 1 à 7, qui comprend un multiplexeur (M11) du côté émission, et un multiplexeur (M22) du côté réception qui est relié par l'intermédiaire d'une ligne de transmission (ZS1) au multiplexeur (M11), et qui comprend des circuits sélecteurs des canaux et des circuits d'alimentation (Ks11, Ks22) dans les deux multiplexeurs (M11, M22), caractérisé en ce que chaque multiplexeur comprend une mémoire d'occupation (Bsg, Bsk), dans laquelle les adresses de créneau temporel de chacun des créneaux temporels sont mémorisées, pendant lesquels les bits de trains de données sont transmis dans des trames de multiplex (MR) définies sur la ligne de multiplex (ZS1), que chaque multiplexeur (M11, M22) comprend un dispositif de commande de signalisation (Ss11, Ss22), qui tient à disposition ou qui capte et évalue l'information de signalisation (Sig) à transmettre, ou transmise, dans chacune des trames du multiplex (MR), que le multiplexeur (M11) prévu côté émission comprend un dispositif de génération de trames de multiplex (MUX11), qui détermine, les trames de multiplex (MR) définies sur la voie de transmission (ZS1) et, à l'intérieur de celles-ci, l'information de synchronisation (Syn), l'information de signalisation (Sig) et les créneaux temporels qui définissent la transmission des bits des trains de données, et que le multiplexeur (M22) prévu du côté réception comprend un dispositif de reconnaissance des trames de multiplex (MUX22), qui détermine, les trames de multiplex (MR) définies sur la voie de transmission (ZS1) et, à l'intérieur de celles-ci, l'information de synchronisation (Syn), l'information de signalisation (Sig) et les créneaux temporels contenant éventuellement des bits de trains de données, et qui rend possible l'exploitation des signaux, ou bits, à chaque fois transmis.

9. Montage selon la revendication 8, caractérisé en ce que chaque multiplexeur (M11, M22) comprend une mémoire tampon dans laquelle les bits des trains de données peuvent être mémorisés temporairement.

# FIG 1

# FIG 2